# EUROPÄISCHE PATENTSCHRIFT

(11) **EP 2 408 646 B1**
(45) Veröffentlichungstag und Bekanntmachung des Hinweises auf die Patenterteilung: **21.08.2013**
(21) Anmeldenummer: 10713594.9
(22) Anmeldetag: 17.03.2010
(51) Int. Cl.: B60R 1/06, E05D 5/12, E05D 7/10, E05D 11/10

(54) **DREHBARE SPIEGELHALTERUNG FÜR KFZ-SPIEGEL, INSBESONDERE FÜR NUTZFAHRZEUGE, SOWIE EINE SPIEGELANORDNUNG MIT EINER SOLCHEN SPIEGELHALTERUNG**
ROTATING MIRROR HOLDER FOR VEHICLE MIRROR, IN PARTICULAR FOR UTILITY VEHICLES, AND A MIRROR ARRANGEMENT HAVING SAID MIRROR HOLDER
FIXATION DE RÉTROVISEUR ROTATIVE POUR RÉTROVISEUR DE VÉHICULE AUTOMOBILE, NOTAMMENT POUR VÉHICULES UTILITAIRES, ET AGENCEMENT DE RÉTROVISEUR COMPRENANT UNE TELLE FIXATION DE RÉTROVISEUR

(30) Priorität: 17.03.2009 DE 102009013645
(43) Veröffentlichungstag der Anmeldung: 25.01.2012
(73) Patentinhaber: MEKRA Lang GmbH & Co. KG, 90765 Fürth (DE)
(72) Erfinder: FELBINGER, Willi, 91478 Markt Nordheim (DE); LUCHT, Mirjam, 91593 Burgbernheim (DE)
(74) Vertreter: Winter, Brandl, Fürniss, Hübner, Röss, Kaiser, Polte - Partnerschaft
(86) Internationale Anmeldenummer: PCT/EP2010/053474
(87) Internationale Veröffentlichungsnummer: WO 2010/106107

(56) Entgegenhaltungen:
- EP-A1- 1 935 719
- WO-A1-2004/024504
- FR-A1- 2 322 764
- GB-A- 2 315 093
- US-B1- 7 490 946

## Beschreibung

Die vorliegende Erfindung betrifft eine drehbare Spiegelhalterung für Kfz-Spiegel, insbesondere für Nutzfahrzeuge, sowie eine Spiegelanordnung mit einer solchen Spiegelhalterung.

Herkömmliche Spiegelhalterungen bestehen gewöhnlich aus zwei Bestandteilen, nämlich einer fahrzeugseitigen Halterung, welche mit dem Fahrzeug verbindbar ist, und einer spiegelseitigen Halterung, welche die Verbindung zu dem jeweiligen Spiegel herstellt. Beide Verbindungsteile weisen entsprechende Verbindungsflächen auf, an denen sie miteinander verbunden werden. Nach dem Stand der Technik werden die Verbindungsteile meist mit einer Schraubverbindung verbunden, teilweise auch mit einer sog. Quick-Lock gesichert. Die Achse der Schraubverbindung definiert zugleich die Drehachse der beiden Teile. Um eine möglichst konstante Reibkraft sicherzustellen, wird in der Regel eine Tellerfeder oder zur weiteren Reduzierung der Toleranzeinflüsse eine Druckfeder untergelegt.

Aus US 7,490,946 B1 ist eine Spiegelhalterung bekannt, bei welcher ein spiegelseitiger Haltearm einen fahrzeugseitigen Zapfen umgreift. Der Zapfen ist radial flexibel und weist an seinem distalen Ende Klauen auf, über welche der Haltearm nach dem Einsetzen des Haltearms axial arretiert ist. Der Zapfen hat an seiner Außenseite sich in axialer Richtung erstreckende Rippen, welche in entsprechende Ausnehmungen des Haltearms eingreifen können. Da der Zapfen radial flexibel ist, kann der Hebelarm in Umfangsrichtung des Zapfens verdreht werden und an den Stellen, an denen die Rippen in die entsprechenden Ausnehmungen eingreifen, arretiert werden.

FR 2 322 764 A1 zeigt ein Spiegelgehäuse aus Kunststoff, welches an einer Halterung befestigt ist. Dabei greift ein Kugelkopf der Halterung in eine komplementär ausgebildete kugelförmige Ausnehmung des Spiegeigehäuses ein.

Aufgrund der Vielzahl der hierzu erforderlichen Komponenten wie Schraube, Mutter, Tellerfedern, etc. ist nicht nur die Herstellung, sondern auch die Montage einer solchen Spiegelhalterung aufwendig und teuer. Die Anforderung an eine konstante Reibkraft sowie die Forderung nach einer stabilen und somit vibrationsarmen Spiegelhalterung führt zur Forderung nach geringen Toleranzen aller Bauteile und einem Montageprozess, bei dem über Regelungen laufend die Fertigungsparameter den Schwankungen angepasst werden. Dieses treibt die Kosten für die Herstellung in die Höhe. Eine höhere Anzahl von Einzelteilen bringt auch immer einen höheren logistischen Aufwand, z. B. hinsichtlich der Bevorratung, mit sich.

Aufgabe der vorliegenden Erfindung ist es deshalb, eine Spiegelhalterung für einen Kfz-Spiegel zu schaffen, welche einerseits mit minimalem Aufwand und kostengünstig hergestellt werden kann und andererseits eine stabile und dauerhafte funktionsfähige Drehverbindung zwischen Fahrzeug und Spiegel bereitstellt.

Diese Aufgabe wird hinsichtlich der Halterung durch die Merkmale des Anspruchs 1 und hinsichtlich der Spiegelanordnung durch die Merkmale des Anspruchs 15 gelöst.

Bei der erfindungsgemäßen Spiegelhalterung weist das erste Verbindungsteil einen Bolzen mit einer rotationssymmetrischen Mantelfläche auf. Das zweite Verbindungsteil weist eine Hülse auf, welche den Bolzen umgreift und eine zu der Mantelfläche des Bolzens komplementär geformte innere Mantelfläche aufweist, wobei der Bolzen oder die Hülse wenigstens ein Eingriffselement aufweist, das in ein komplementär geformtes Halteelement in der Hülse oder dem Bolzen eingreift, dadurch eine Verschiebung der beiden Verbindungsteile in Richtung der Drehachse blockiert. Die Spiegelhalterung ist erfindungsgemäß im In-Mould-Assembly- oder Montagespritzguss-Verfahren hergestellt.

Durch das Ineinandergreifen von Eingriffselement und Halteelement sind die beiden Verbindungsteile formschlüssig miteinander verbunden und erlauben lediglich eine Rotation um die Drehachse. Dabei ist zum einen der Bolzen in der Hülse radial fixiert und zentriert und anderseits ist der Bolzen in der Hülse axial fixiert. Aufgrund dieses Formschlusses ist auch keine Schraubverbindung oder ähnliches zur Fixierung der beiden Verbindungsteile mehr nötig, so dass Material und Montagekosten eingespart werden können und die Gesamtkosten der Spiegelhalterung reduziert werden können. Aufgrund des Wegfalls der Montage können auch keine Montagefehler mehr auftreten.

Vorzugsweise weisen Hülse und Bolzen zueinander komplementär geformte erste und zweite Rastflächen auf. Durch das Vorsehen von Rastflächen lassen sich einerseits bestimmte Relativwinkel der beiden Verbindungsteile zueinander definieren, zum anderen kann darüber ein bestimmter Schwellwert für die Abklappkraft des Spiegels eingestellt werden. Die Abklappkraft muss zum einen so groß sein, dass der Spiegel bei normalem Gebrauch äußeren Kräften wie Windwiderstand Stand hält, sich jedoch vom Fahrer einstellen lässt oder bei ungewöhnlichen Krafteinwirkungen aus Sicherheitsgründen nachgibt.

Gemäß Anspruch 3 sind die beiden Rastflächen auf den Mantelflächen von Bolzen und Hülse ausgebildet. Dies ermöglicht, dass sich der Drehwiderstand über die Wandstärke der Hülse einstellen lässt. Wenn die Wandstärke der Hülse gering ist, weicht diese beim Verdrehen des Bolzens radial nach außen aus. Des Weiteren wird die Rastkraft bestimmt durch die Form der Rastung als Abflachung, Welle oder dergleichen sowie der Rasttiefe.

Gemäß Anspruch 4 sind die beiden Rastflächen an der Stirnfläche des Bolzens sowie dem Boden in der Hülse vorgesehen. Da die axiale Verschiebung der beiden Verbindungsteile über Eingriffselement und Haltelement blockiert wird, sind die Stirnfläche des Bolzens und der Hülsenboden gewissermaßen gegeneinander vorgespannt, so dass die Rastflächen ineinandergreifen. Bei entsprechender Ausgestaltung von Eingriffselement und Haltelement kann eine Rastfunktion mit einer geringeren Rastkraft als in der vorherigen Variante hergestellt werden.

Wenn die Drehachse quer zur Längsachse vom ersten und/oder zweiten Verbindungsteil ausgebildet ist, stellt die erfindungsgemäße Spiegelhalterung ein Schwenkgelenk dar. Die erfindungsgemäße Spiegelhalterung erlaubt somit nicht nur eine Drehung von zwei Verbindungsteilen auf einer Drehachse, sondern auch das Schwenken eines Verbindungsteils um diese Drehachse. Damit stellt die erfindungsgemäße Spiegelhalterung eine flexible Verbindung dar und ist nicht an irgendwelche Schraubachsen von Schraubverbindungen gebunden.

Vorzugsweise ist die Hülse ein Spritzgussteil aus einem ersten Kunststoff. Diese Ausgestaltung bietet eine Reihe von Vorteilen. Zum einen lässt sich die gesamte Spiegelhalterung auf sehr einfache Weise herstellen, indem das zweite Verbindungsteil auf das erste Verbindungsteil aufgespritzt wird. Durch das Aufspritzen des Kunststoffes wird auch gleichzeitig eine nahezu spiegetfreie Verbindung zwischen Hülse und Bolzen erreicht. Beim Aushärten des Kunststoffes wird durch das Schrumpfen der Hülse sogar eine radiale Kraft auf den Bolzen erzeugt, so dass bereits über die Auswahl des Kunststoffes die Radialkraft der Hülse auf den Bolzen, d.h. die Abklappkraft des Spiegels, eingestellt werden kann.

Bei der Auswahl des Kunststoffes ist ein Ankleben oder Verbacken der zueinander schwenkbaren Verbindungsteile beim Spritzgießen auszuschließen. Da die Hülse auf die Mantelfläche des Bolzens aufgespritzt wird und die Form der Innenmantelfläche der Hülse komplementär der Mantelfläche des Bolzens anpasst, haben Fertigungsungenauigkeiten bei der Herstellung des Bolzens keine Auswirkungen auf die Funktionsfähigkeit der Drehverbindung. Diese Ungenauigkeiten werden beim Spritzgießen einfach ausgeglichen. Durch diese Anpassung wird auch eine sehr vibrationsarme Spiegelhalterung erreicht.

Da Spiegelhalterungen in großen Stückzahlen hergestellt werden, ergeben sich durch dieses Herstellungsverfahren enorme Kostenersparnisse, welche die Herstellung des Spritzgusswerkzeuges bei weitem übersteigen. Durch das Spritzgießen der Hülse lässt sich auch bei komplizierter gestalteten Mantelflächen des Bolzens immer eine dazu komplementäre Mantelfläche der Hülse erzeugen, so dass über die Gestaltung des Bolzens letztendlich bereits der Formschluss der Spiegelhalterung definiert ist.

Durch das Spritzgießen der Hülse wird eine unlösbare Verbindung zwischen erstem und zweitem Verbindungsteil erreicht, so dass man eine stabile und dauerhaft verbundene Drehverbindung zwischen zwei Verbindungsteilen erzielt, welche über ihre gesamte Lebensdauer nicht gewartet werden muss.

Vorzugsweise ist nicht nur die Hülse, sondern auch der Bolzen ein Spritzgussteil, wobei dieses aus einem zweiten Kunststoff besteht, dessen Schmelzpunkt höher ist als der des ersten Kunststoffes. Die Spiegelhalterung ist im sogenannten In-Mould-Assembly-Verfahren bzw. Montagespritzgussverfahren hergestellt. Hierbei wird in der einfachen Verfahrensart ein erstes Verbindungsteil hergestellt. Dies kann sowohl ein Kunststoffbauteil als auch ein Druckgussbauteil oder sonstiges Bauteil sein. In einem zweiten Verfahrensschritt wird dieses erste Verbindungsteil in das Werkzeug zur Herstellung des zweiten Verbindungsteils eingelegt, wobei durch die vorteilhafte Gestaltung durch den Herstellungsprozess die Hülse den Bolzen umgibt. Wenn auch das erste Bauteil in Kunststoff ausgeführt wird, erlaubt dies, dass die Spiegelhalterung in einem einzigen Fertigungsprozess mit einzelnen Prozessschritten gefertigt werden kann, wodurch die Herstellungskosten weiter gesenkt werden können. Die beiden Kunststoffarten sind so zu wählen, dass beim Aufspritzen der Hülse über den Kunststoffbolzen dieser nicht aufgeschmolzen wird. Ferner können über die Kombination der beiden Kunststoffarten die Reib- bzw. Rastkräfte der beiden Verbindungsteile zueinander eingestellt werden.

Um die Beweglichkeit der beiden Verbindungsteile zu gewährleisten, muss sichergestellt werden, dass bei der der Herstellung des zweiten Verbindungsteils dessen Kunststoff keine Verbindung an der Oberfläche mit dem Material des ersten Verbindungsteils eingeht. Hierzu ist es erforderlich, dass die Schmelztemperatur des ersten Materials höher ist als die Temperatur des zweiten Materials zum Zeitpunkt des Kontakts des ersten zweiten Materials auf dem ersten Material. Bei passend gewählten Fertigungsparametern ist eine Herstellung beider Teile aus dem gleichen Material möglich. Jedoch ist es von besonderem Vorteil, wenn die beiden Materialien unterschiedlicher Art sind und selbst im plastischen Zustand nur eine sehr geringe Neigung haben, miteinander zu verschmelzen, wobei das Material des ersten Verbindungsteils eine höhere Temperaturbeständigkeit haben sollte.

Die Beweglichkeit der beiden Verbindungsteile kann auch erreicht werden, indem zwei Kunststoffarten ausgewählt werden, welche miteinander inkompatibel sind und nicht aneinander haften. Dies erlaubt ein nahezu gleichzeitiges Spritzgießen beider Verbindungsteile.

Vorzugsweise ist das Halteelement eine in der Mantelfläche von Bolzen oder Hülse umlaufende Nut. Eine solche Ringnut lässt sich auf sehr einfache Weise herstellen und erlaubt einerseits eine Drehbewegung des komplementären Verbindungsteils um die Drehachse und verhindert andererseits eine Relativverschiebung der beiden Teile in Richtung der Drehachse. Diese Nut bildet einen Hinterschnitt.

Vorzugsweise ist das Eingriffselement eine in die Nut eingreifende, vorzugsweise ebenfalls umlaufende, Erhebung. Eingriffselement und Halteelement bilden somit einen Formschluss in Richtung der Drehachse.

Wenn die ersten und zweiten Rastflächen in der Nut bzw. an der Erhebung vorgesehen sind, lassen sich mit einem Fertigungsschritt sowohl die axiale Fixierung als auch die Arretierung der beiden Verbindungsteile in Umfangsrichtung herstellen.

Gleichermaßen einfach wie effektiv ist die Gestaltung des Bolzens mit der Form einer Teilkugel. Hierdurch wird wie durch die Kombination von Nut und Erhebung ein Formschluss erreicht, der ein Verschieben der Verbindungsteile sicher verhindert und die freie Drehbewegung ermöglicht. Sofern die Hülse ausschließlich den Teil der Kugelform überdeckt, so kann durch diese vorteilhafte Gestaltung ein weiter Freiheitsgrad erreicht werden, als dass das zweite Verbindungsteil gegenüber dem ersten Verbindungsteil nicht nur um die Drehachse bewegt werden kann, sondern auch um den Kugelmittelpunkt in einem kleinen Winkelbereich geschwenkt werden. Hiermit ist eine flexible Nutzung der gleichen Spiegelhalterung bei unterschiedlichen Stellungen des Spiegelkopfes und der Drehachse des Spiegelsystems möglich.

Wie bereits oben erwähnt, ist die erfindungsgemäße Spiegelhalterung im In-Mould-Assembly- bzw. Montagespritzgussverfahren auf sehr einfache Weise hergestellt. Dabei wird das erste Spritzgussteil in einer ersten Form gefertigt und anschließend in eine zweite Form eingebracht und mit dem zweiten Spritzgussmaterial umspritzt. Wahlweise verbleibt das erste Spritzgussteil in der ersten Form und es wird lediglich eine weitere Kavität in der Form des zweiten Spritzgussteils freigegeben. Das erste Spritzgussteil stellt sozusagen den Einleger für das zweite Spritzgussteil dar. Man spricht auch von einem sogenannten Vorspritzling. Auf diese Weise lassen sich verschiedenste passgenaue Verbindungsflächen beider Verbindungsteile erzielen, welche eine Relativbewegung der beiden Verbindungsteile zueinander erlauben, jedoch eine axiale Verschiebung verhindern.

Die beiden Verbindungsteile der erfindungsgemäßen Spiegelhalterung sind vorzugsweise unlösbar miteinander verbunden, so dass sich die Verbindung nicht von alleine lockern kann.

Vorzugsweise sind der Bolzen und die Hülse jeweils einstückig ausgebildet, so dass sich die Anzahl der Verbindungsteile auf ein Minimum reduziert.

Gegenstand des Anspruchs 15 ist eine Spiegelanordnung mit wenigstens einer Spiegelhalterung gemäß einer der zuvor genannten Ausgestaltungen.

### Kurze Beschreibung der Figuren

Es zeigen:
Fig. 1 eine Spiegelanordnung mit einem Spiegelgehäuse und zwei Spiegelhalterungen gemäß einer ersten Ausführungsform der Erfindung;
Fig. 2 eine Querschnittsansicht entlang der in der Fig. 1 gezeigten Linie II-II;
Fig. 3 eine Querschnittsansicht entlang der in Fig. 2 gezeigten Linie III-III;
Fig. 4 eine Spiegelhalterung gemäß einer zweiten Ausführungsform;
Fign. 5A bis 5F einen Längsschnitt entlang der in Fig. 4 gezeigten Linie V-V mit verschiedenen Formen von Halte- und Eingriffselementen;
Fig. 6 ein erstes Verbindungsteil mit Rastflächen auf einer Mantelfläche des Bolzenabschnitts gemäß einer dritten Ausführungsform;
Fig. 7 ein erstes Verbindungsteil mit Rastflächen in einer umlaufenden Ringnut in einem Bolzenabschnitt gemäß einer vierten Ausführungsform;
Fign. 8A bis 8E einen Querschnitt entlang der Linie VIII-VIII in Fig. 6;
Fig. 9 eine Spiegelhalterung gemäß einer fünften Ausführungsform;
Fig. 10 eine Explosionsansicht der Fig. 2a;
Fig. 11 eine Detailansicht des in Fig. 9 gezeigten Spiegelfußes;
Fig. 12 den in Fig. 9 gezeigten Spiegelfuß gemäß einer sechsten Ausführungsform;
Fig. 13 eine Spiegelhalterung gemäß einer siebten Ausführungsform;
Fig. 14 eine Explosionsansicht der Fig. 13;
Fig. 15 eine Spiegelhalterung gemäß einer achten Ausführungsform;
Fig. 16 eine Explosionsansicht der Fig. 15; und
Fig. 17 eine Spiegelhalterung gemäß einer neunten Ausführungsform.

### Ausführliche Beschreibung der Ausführungsformen

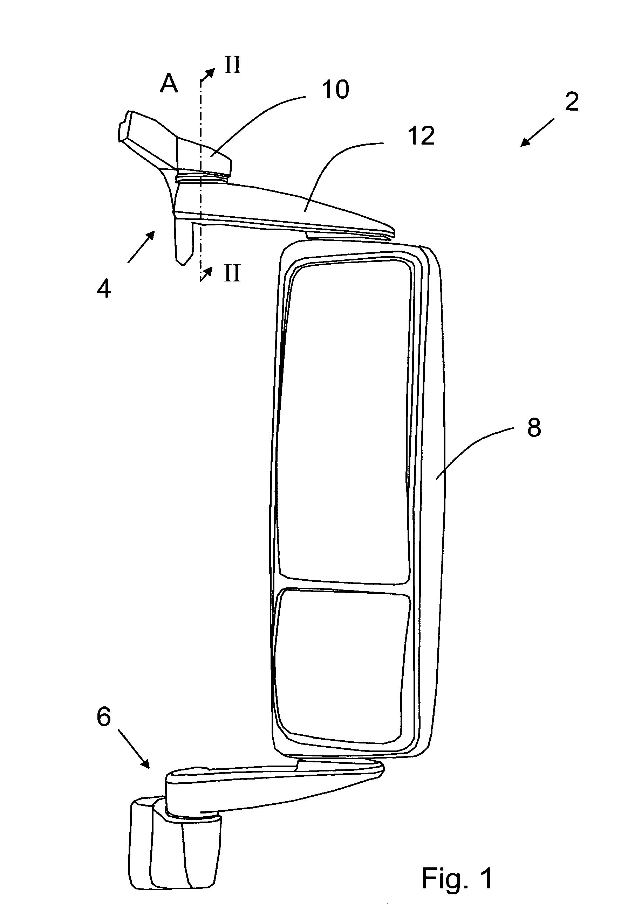

Fig. 1 zeigt eine Spiegelanordnung 2 mit einer oberen Spiegelhalterung 4 und einer unteren Spiegelhalterung 6, zwischen welchen ein Spiegelgehäuse 8, wahlweise drehbar, aufgenommen ist. Die Spiegelhalterung 4 besteht aus einer fahrzeugseitigen Halterung 10 als ein erstes Verbindungsteil und einer spiegelseitigen Halterung 12 als ein zweites Verbindungsteil, welche um eine Drehachse A relativ zueinander verdrehbar sind. Diese Drehachse A verläuft in gleicher Weise durch die untere Spiegelhalterung 6 und ermöglicht so das Verschwenken des gesamten Spiegels mit dem Spiegelkopf gegenüber dem Fahrzeug. Im Spiegelgehäuse 8 sind wiederum verstellbar gelagerte Spiegelgläser vorgesehen. Die fahrzeugseitige Halterung 10 weist zur Befestigung an dem Fahrzeug entsprechende Befestigungsflächen auf. Auf der anderen Seite ermöglicht die spiegelseitige Halterung 12 eine zu dem jeweiligen Spiegelgehäuse 8 entsprechende Anbindung. In dieser Ausführungsform ist das Spiegelgehäuse 8 beidseitig an Spiegelarmen befestigt, welche durch die spiegelseitige Halterungen 12 gebildet werden.

Die in Fig. 1 gezeigte Spiegelanordnung 2 weist zwei Spiegelhalterungen 4 und 6 auf. In der folgenden Beschreibung wird beispielhaft lediglich die obere Spiegelhalterung 4 beschrieben, wobei wahlweise nur die obere Spiegelhalterung 4, nur die untere Spiegelhalterung 6 oder beide Spiegelhalterungen 4 und 6 wie im Folgenden beschrieben aufgebaut sein können.

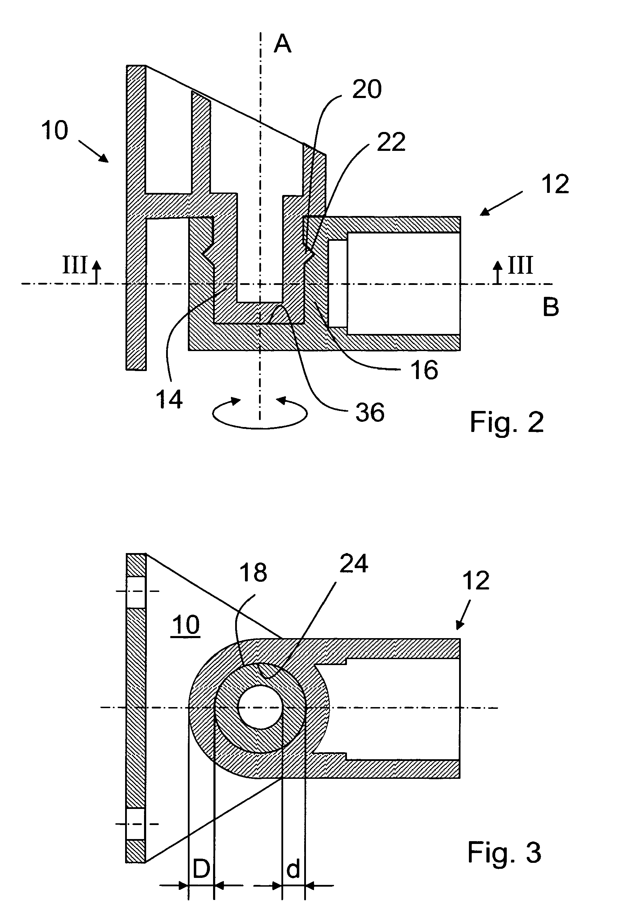

Fig. 2 zeigt eine Querschnittsansicht der oberen Spiegelhalterung 4 mit einem ersten Verbindungsteil 10, welches mit dem Fahrzeug verbindbar ist, und einem zweiten Verbindungsteil 12, welches mit dem Spiegelgehäuse 8 verbindbar ist. Das erste Verbindungsteil 10 weist einen Bolzen 14 auf, welcher von einer Hülse 16 des zweiten Verbindungsteils 12 umgriffen ist. Der Bolzen 14 hat auf seiner äußeren Mantelfläche 18 einen rotationssymmetrisch umlaufenden Vorsprung 20, welcher in eine entsprechend komplementär geformte Ringnut 22 eingreift, die in einer inneren Mantelfläche 24 der Hülse 16 ausgebildet ist. Dadurch lassen sich die beiden Verbindungsteile 10 und 12 relativ zueinander um die Drehachse A drehen, jedoch nicht entlang der Drehachse A verschieben. Damit sind die beiden Verbindungsteile 10 und 12 einerseits zueinander beweglich, andererseits jedoch miteinander unlösbar verbunden.

Diese Drehverbindung kann auf sehr einfache Weise im sogenannten Montagespritzguss, auch in einem einzigen Spritzgießwerkzeug, hergestellt werden, bei welchem die einzelnen Spritzgussteile nicht miteinander montiert werden müssen, sondern ineinander aushärten. Wahlweise kann auch das Verbindungsteil 10 mit dem Bolzen 14 aus einem anderen beliebigen Material, auch aus Metall, gefertigt sein, auf welches zur Ausbildung der Hülse 16 ein Kunststoff aufgespritzt wird. Bei der Auswahl der verwendeten Materialien ist jedoch darauf zu achten, dass sich diese beim Herstellungsprozess nicht miteinander verbinden oder aneinander haften, um die gewünschte Drehbeweglichkeit der beiden Verbindungsteile zueinander zu erreichen. Daher sollten bei der Herstellung der beiden Verbindungsteile Kunststofftypen verwendet werden, welche miteinander inkompatibel sind. Die Drehbeweglichkeit kann insbesondere dadurch bewerkstelligt werden, dass das den Bolzen aufweisende und zuerst spritzgegossene Verbindungsteil aus einem Kunststoff besteht, welcher einen höheren Schmelzpunkt hat als das der des in einem darauffolgenden Schritt auf das erste Verbindungsteile gegossenen zweiten Verbindungsteils.

Durch das Aufspritzen des einen Verbindungsteils auf das andere ist die Toleranz der Bauteile hinsichtlich ihrer Größe unbedeutend, da die Hülse im zweiten Verbindungsteil zwangläufig die Größe des Bolzens des ersten Verbindungsteils annimmt. Somit wird eine spielfreie Verbindung bei hoher Passungsqualität ohne übertriebene Prozessanforderungen erreicht, welche hinsichtlich des Vibrationsverhaltens einer solchen Spiegelhalterung höchsten Anforderungen gerecht wird.

Da die aufgespritzte Hülse 16 sich der Mantelfläche 18 des Bolzens 14 anschmiegt und beim Aushärten etwas schrumpft, wird eine radiale Kraft von der Hülse 16 auf den Bolzen 14 erzeugt, so dass eine bestimmte Drehkraft notwendig ist, um die beiden Verbindungsteile 10 und 12 zueinander zu verdrehen. Diese Reibkraft zwischen Bolzen 14 und Hülse 16 definiert damit eine bereits beim Herstellungsprozess der Spiegelhalterung erzeugte Abklappkraft, welche einerseits gewöhnlichen äußeren Kräften, wie Windwiderstand, standhält, andererseits - wenn gewünscht - eine Verdrehung der beiden Verbindungsteile zueinander zulässt. Diese Abklappkraft kann über die Wahl der verschiedenen Materialkombinationen eingestellt werden.

Ein weiterer Parameter für die Einstellung der Drehbeweglichkeit der beiden Verbindungsteile 10 und 12 stellt die Wandstärke D der Hülse 16 dar. Da je nach Wandstärke eine mehr oder weniger steife Konstruktion erreicht wird und damit entsprechend die Reibkräfte zwischen Hülse 16 und Bolzen 14 zu- oder abnehmen. Ferner kann auch der Bolzenabschnitt 14, wie in den Fign. 2 und 3 gezeigt, ein Hohlprofil aufweisen, so dass auch über die Wandstärke d des Bolzens 14 die Reibkräfte zwischen Bolzen 14 und Hülse 16 eingestellt werden können.

Selbstverständlich kann entgegen der Darstellung der Fign. 2 und 3 auch die spiegelseitige Halterung 12 einen Bolzen aufweisen, welcher in eine Hülse einer fahrzeugseitigen Halterung eingreift.

Während die Fign. 1 bis 3 eine erfindungsgemäße Spiegelhalterung gezeigt haben, bei welcher die Längsachse B eines Verbindungsteils, nämlich der spiegelseitigen Halterung 12, senkrecht zur Drehachse A ausgebildet ist und sozusagen ein Schwenkgelenk bzw. eine schwenkbare Spiegelhalterung bildet, wird nachfolgend eine zweite Ausführungsform beschrieben, bei welcher die Längsachsen beider Verbindungsteile auf der Drehachse liegen. Daraus ist ersichtlich, dass die erfindungsgemäße Spiegelhalterung ohne konstruktiven Mehraufwand verschiedenste Drehverbindungen ermöglicht.

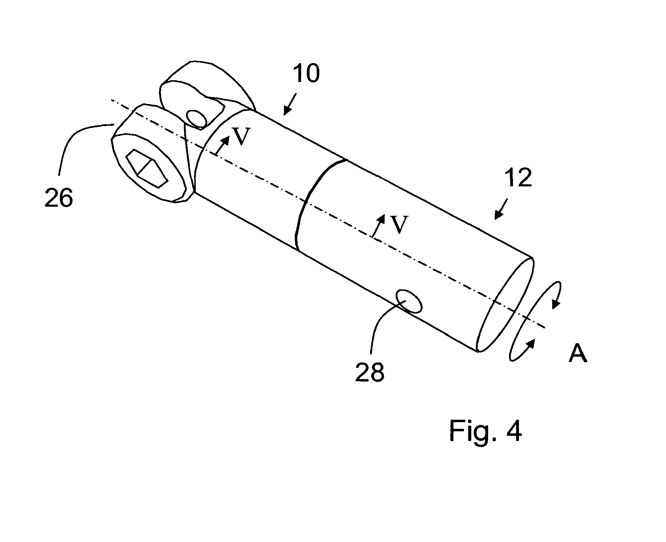

Wie bereits erwähnt, zeigt Fig. 4 eine Spiegelhalterung 4, welche aus einer fahrzeugseitigen Halterung 10 und einer spiegelseitigen Halterung 12 besteht. Die beiden Verbindungsteile 10 und 12 lassen sich bezüglich einer gemeinsamen Längsachse A relativ zueinander verdrehen. Eine solche Spiegelhalterung, bei welcher das Spiegelgehäuse nicht geschwenkt werden braucht, sondern lediglich um die Achse der Spiegelhalterung gedreht werden soll, kann z. B bei sog. Rampen- oder Frontspiegeln bei Nutzfahrzeugen verwendet werden.

Ähnlich wie in der ersten Ausführungsform weist das spiegelseitige Verbindungsteil 12 eine Hülse 16 auf, welche einen Bolzen 14 des fahrzeugseitigen Verbindungsteils 10 umgreift. Ein Endabschnitt des fahrzeugseitigen Verbindungsteils 10 umfasst einen Befestigungsabschnitt 26, welcher an einem entsprechenden Gegenstück am Fahrzeug über eine Schraubverbindung in verschiedenen Drehstellungen um die Schraubachse festklemmbar ist. Das spiegelseitige Verbindungsteil 12 weist zur Anbindung des Spiegelgehäuses eine Bohrung 28 auf.

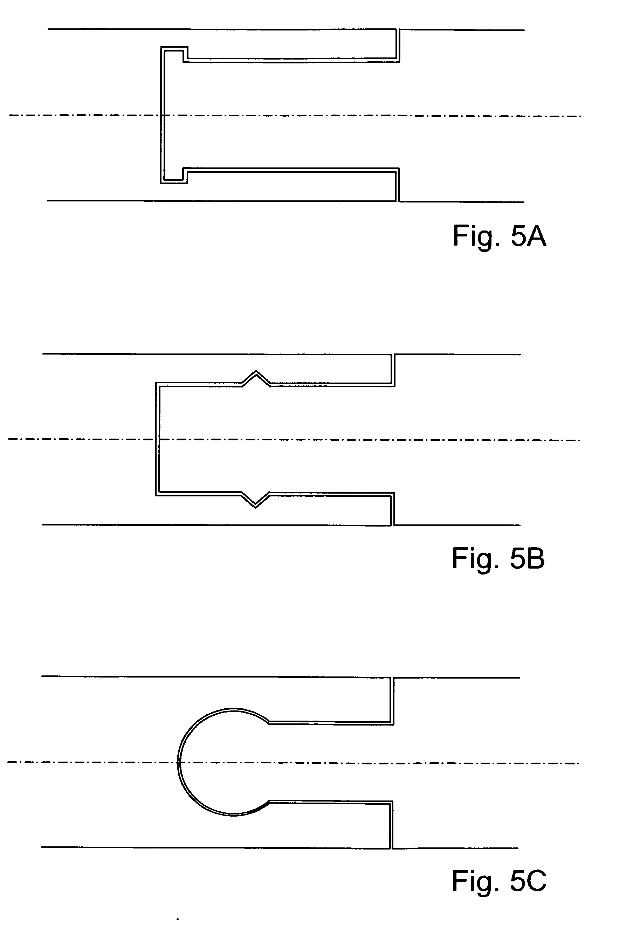

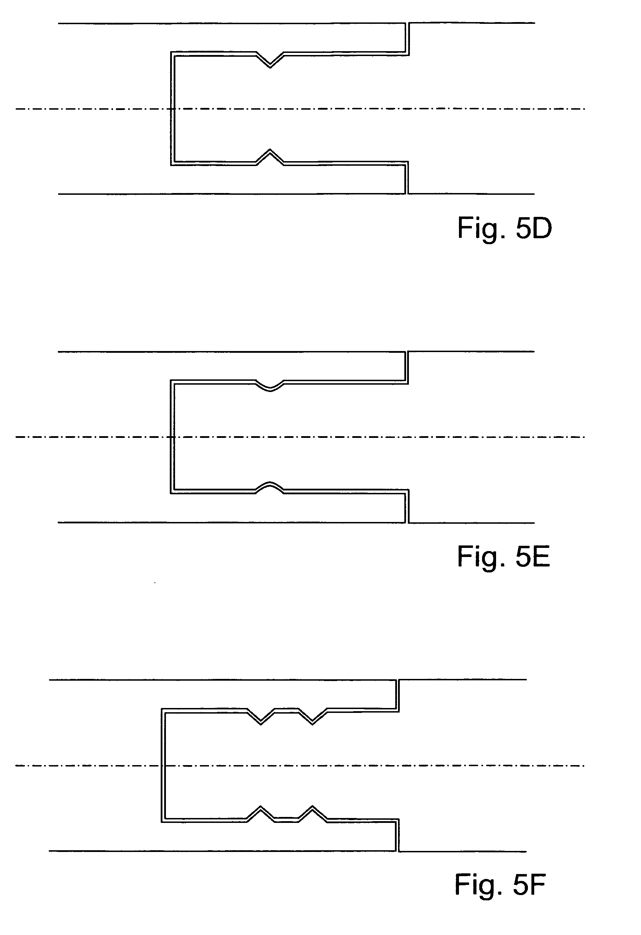

Die axiale Fixierung der beiden Verbindungsteile 10 und 12 kann auf verschiedenste Art und Weise realisiert werden, wie in den Fign. 5A bis 5F beispielhaft gezeigt ist. Die Fign. 5A bis 5F zeigen schematisch Längsschnitte entlang der Linie V-V der Fig. 4. Während in den Fign. 5A bis 5C der Bolzen 14 verschiedene Eingriffselemente 20 in der Form eines Flanschs (Fig. 5A), eines umlaufenden Vorsprungs (Fig. 5B) und einer Kugel (Fig. 5C) aufweist, welche in entsprechende Ausnehmungen der Hülse 16 eingreifen, sind in den Fign. 5D bis 5F die Eingriffselemente an der Innenmantelfläche der Hülse 16 ausgebildet, welche in entsprechend komplementäre Ausnehmungen in der Mantelfläche 18 des Bolzens 14 eingreifen. Gemäß Fig. 5D können auch mehrere Eingriffselemente mit entsprechenden Halteelementen zusammenarbeiten. Neben den in Fig. 5A bis 5F gezeigten Varianten sind selbstverständlich weitere Ausgestaltungen denkbar. Allen Varianten ist jedoch gemeinsam, dass sie eine rotationssymmetrische und ununterbrochene Mantelfläche aufweisen, um eine Drehbewegung der beiden Verbindungsteile zueinander zu ermöglichen.

Es ist zu beachten, dass die Verbindung von Bolzen 14 und Hülse 16 in den Fign. 5A bis 5F zu Veranschauungszwecken mit großem Spiel dargestellt sind, welche die efindungsgemäße Spiegelhalterung selbstverständlich nicht aufweist, da die Hülse 16 um den Bolzen 14 spritzgegossen wird, um sich der Außenkontur des Bolzens anzupassen und anzuschmiegen. Die Hülse 16 liegt nicht nur passgenau an dem Bolzen an, sondern bringt aufgrund von Schrumpfungsprozessen eine Radialkraft an dem Bolzen an, so dass allein beim Herstellungsprozess der erfindungsgemäßen Spiegelhalterung ein gewisser Reibschluss zwischen beiden Verbindungsteilen entsteht. Dieser Reibschluss zwischen Bolzen 14 und Hülse 16 ist erwünscht, da der Spiegel nicht frei beweglich gelagert sein soll. Zur Erhöhung dieser zur Verdrehung der beiden Verbindungsteile 10 und 12 notwendigen Kraft können weitere Maßnahmen vorgenommen werden, welche mit Bezug auf die folgende dritte Ausführungsform beschrieben werden.

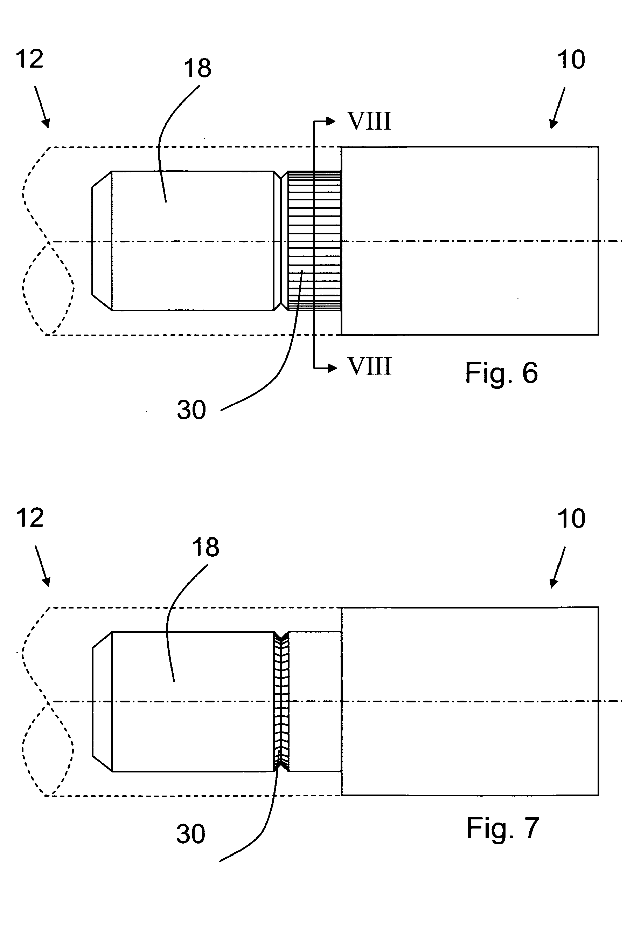

Fig. 6 zeigt ein Verbindungsteil 10, welches auf der Mantelfläche 18 des Bolzens 14 nicht nur eine Ringnut 22 aufweist, sondern auch Rastflächen 30. Diese Rastflächen 30 können, wie in Fig. 6 gezeigt, nur auf einem bestimmten Abschnitt der Mantelflächen 18 oder auf der gesamten Mantelfläche 18 vorgesehen sein. Alternativ kann, wie in Fig. 7 gezeigt, auch das Halteelement 22 die Rastflächen 30 aufweisen. Durch das Vorsehen solcher Rastflächen 30 wird das zuvor erwähnte Erfordernis einer rotationssymmetrischen Mantelfläche, welche grundsätzlich für die Drehbeweglichkeit der Verbindungsteile 10 und 12 zueinander notwendig ist, nicht erfüllt. Wenn aber eine polygonartige Geometrie oder eine Verzahnung mit nur geringem effektivem Flankenwinkel mit nur sehr geringen Abweichungen von der Kreisform verwendet wird, lassen sich die beiden Verbindungsteile 10 und 12 bei Aufbringung eines bestimmten Drehmoments nach wie vor zueinander verdrehen. Das Vorsehen solcher Rastflächen bietet nicht nur die Möglichkeit, die Abklappkraft der Spiegelhalterung zu erhöhen, sondern auch eine Einstellbarkeit der beiden Spiegelhalterungsteile in vorbestimmten Relativwinkeln zueinander.

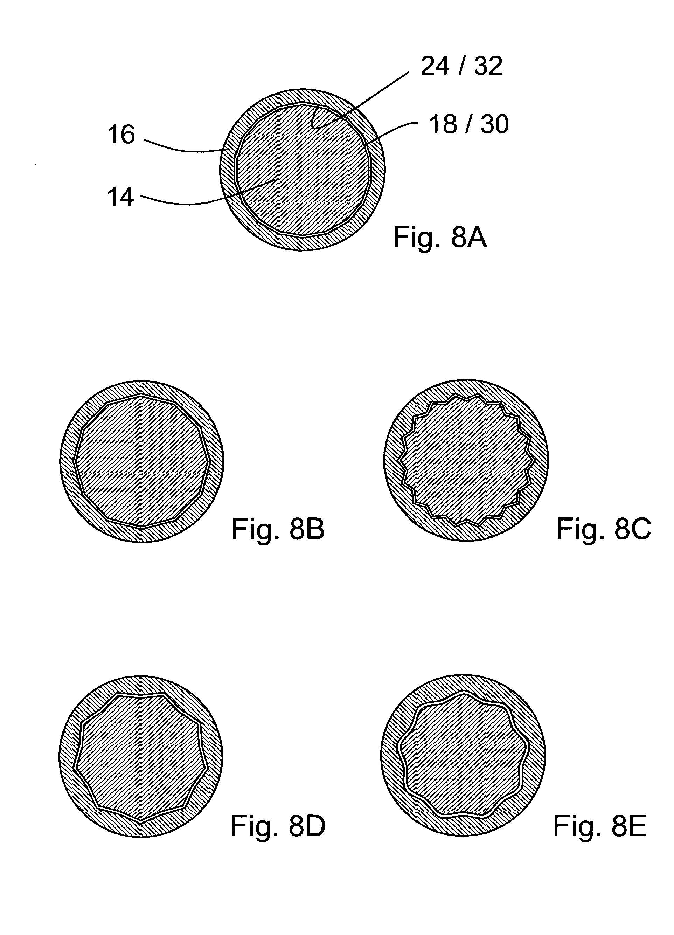

In den Fign. 8A bis 8E sind verschiedene Varianten solcher Rastflächen 30 mit entsprechend komplementären Rastflächen 32 an der Innenmantelfläche 24 der Hülse 14 in Querschnittsansicht entlang der Linie VIII-VIII in der Fig. 6 gezeigt. Die Rastflächen können zahn- oder wellenförmig gestaltet sein. Je mehr die Mantelflächen 18 und 24 von der Kreisform abweichen, umso ein größeres Drehmoment wird benötigt, um die Hülse 16 gegenüber dem Bolzen 14 zu verdrehen. Wenn die Hülse 16 ein Spritzgussteil aus Kunststoff ist, welches auf den Bolzen 14 aufgespritzt wird, lässt sich auf sehr einfache Weise eine zu der Mantelfläche 18 des Bolzens 14 komplementäre Innenmantelfläche 24 der Hülse 16 erzeugen. Die Rast- bzw. Reibkräfte zwischen Hülse 16 und Bolzen 14 kann nicht nur über die Wahl der Rastflächengeometrie, sondern auch über die Wahl der verwendeten Materialien und Wandstärken eingestellt werden. Wenn die Hülse nach dem Herstellungsprozess ohnehin schon eine bestimmte radiale Kraft auf den Bolzen anbringt, genügen bei den Rastflächen bereits sehr flache Winkel (gegenüber der Kreislinie), um hohe Rastkräfte zu erzeugen, so dass auch über die Lebensdauer eine ausreichende Stabilität und Abriebfestigkeit der Verbindungsteile garantiert werden kann.

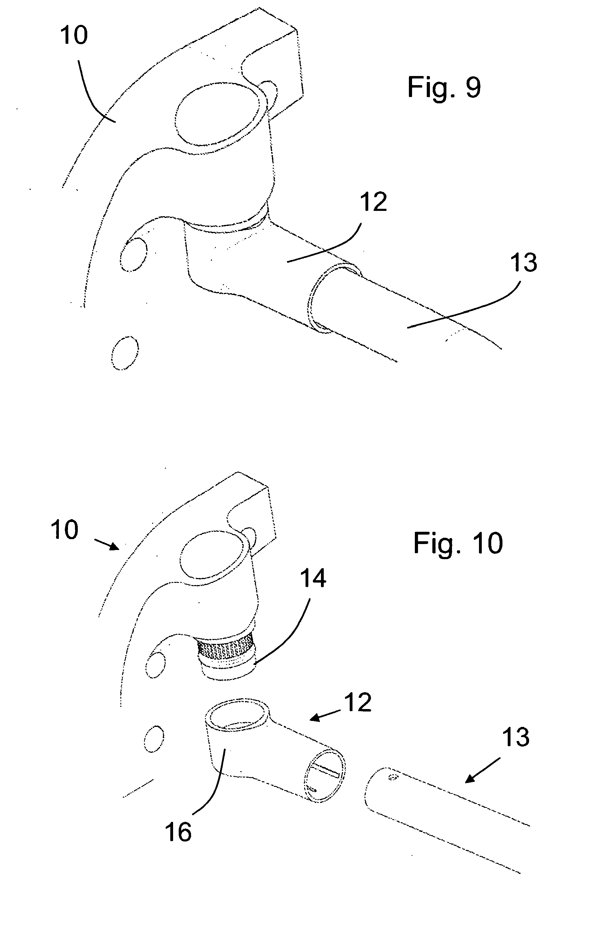

Ein herkömmlicher Träger für einen Nutzfahrzeugspiegel wird aus einem Metallrohr gebildet. Der Anschluss an das Verbindungselement erfolgt in einer Rohrhülse. Die gewöhnliche Rohrgestalt nimmt die Form eines "U" an, wobei hierdurch ein oberer und unterer Arm den Anschluss zur Spiegelhalterung bilden und der mittlere Teil des "U" in grober Näherung parallel zur Drehachse verläuft. Dies führt dazu, dass die Längsachse B als Mittelachse des Rohrendes in der Rohrhülse des ersten oder zweiten Verbindungsteils quer zur Drehachse ausgebildet ist. Hierdurch kann man zum einen auf bewährte Konzepte zurückgreifen, zum anderen sind so auch Lösungen für kleinere Stückzahlen realisierbar, da die Werkzeugkosten für die je Ausführung individuellen Bauteile geringer gehalten werden können, als wenn die gesamte Tragstruktur aus einem für die Ausführung spezifisch herzustellenden "Design"-Bauteil besteht. Die entsprechende Lösung zeigt die Fig. 9, wobei nun der Spiegelarm zweiteilig ist und aus einer Rohrhülse 12 als zweites Verbindungsteil und einem Tragrohr 13 gebildet wird.

Durch die Ausführung mit einer Rasthülse 12 und einem Tragrohr 13 wird die Flexibilität in der Nutzung dieser erfinderischen Halterung weiter verbessert. Durch die rotatorisch beliebige Lage des Tragrohres in der Rohrhülse durch Drehung um die Längsachse B können unterschiedliche Stellungen des Tragrohres und somit des Spiegelkopfes relativ zur Drehachse A bei der Verwendung der identischen Spiegelhalterung ermöglicht werden. Somit kann die gleiche Spiegelhalterung für verschiedene Fahrzeuge eingesetzt werden.

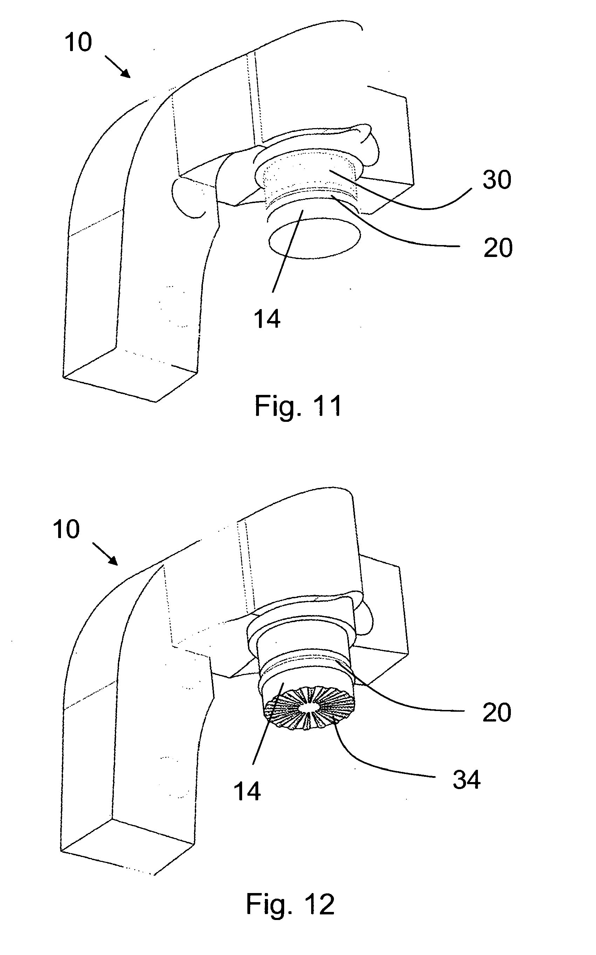

Fig. 11 als erstes Verbindungsteil einen Spiegelfuß 10 mit einer ringförmigen Erhebung und einer an der äußeren Mantelfläche 18 angebrachten Rastgeometrie. Durch die Herstellung des Verbindungsteils als Kunststoffspritzgussbauteil oder Druckgussbauteil kann die günstige Form mit den für die Ausführung notwendigen Elementen des Bolzens 14 mit der äußeren Mantelfläche 18 und einem ringförmigen Vorsprung 20 als Eingriffselement ohne Mehraufwand hergestellt werden. Alternativ zu der Rastgeometrie an der äußeren Mantelfläche 18, kann diese auch wie in Fig. 12 gezeigt an der Stirnfläche 34 des Bolzenabschnitts 14 vorgesehen sein, welche mit einer entsprechenden Rastfläche am Hülsenboden 36 (siehe Fig. 2) der spiegelseitigen Halterung 12 zusammenwirkt.

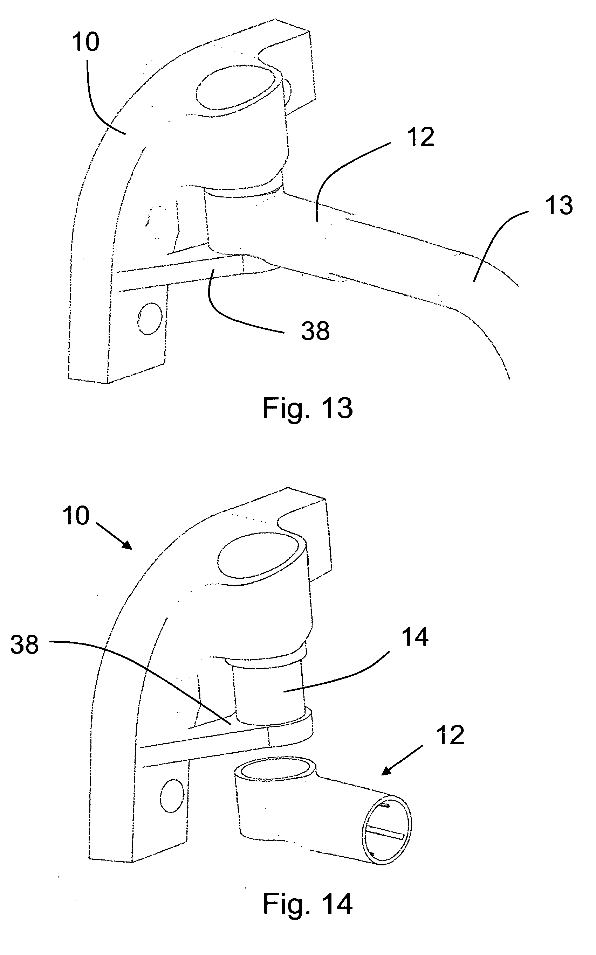

Hinsichtlich der Vibrationseigenschaften ist es entscheidend, wie steif die Spiegelhalterung ausgeführt ist. Je nach den geometrischen Verhältnissen - Abstand der Halterungen 4, 6 voneinander und des Spiegelkopfes von der Drehachse - sowie der Steifigkeit der weiteren tragenden Struktur - z. B. dem Tragrohr 13 oder dem Spiegelkopf - ist es wichtig, dass der Bolzen 14 eine steife Lage besitzt. Sofern eine ausreichende Gestaltungsfreiheit und Bauraum für das fahrzeugseitige Verbindungsteil 10 vorhanden ist, kann auch eine zweite Anbindung des Bolzens an den Grundkörper des Verbindungsteils 10 hergestellt werden. Dies kann mittels eines Querstegs 38 am Ende des Bolzenabschnitts 14 erreicht werden. Entsprechend weist die Hülse 16 in dieser Ausführungsform eine Durchgangsbohrung auf. Zur Lagesicherung ist dabei auch kein Eingriffselement bzw. Haltelement an den Mantelflächen 18 bzw. 24 mehr erforderlich, da diese Aufgabe bereits der Quersteg 38 übernimmt. Beispielhaft zeigen die Fign. 13 und 14 eine entsprechende Lösung.

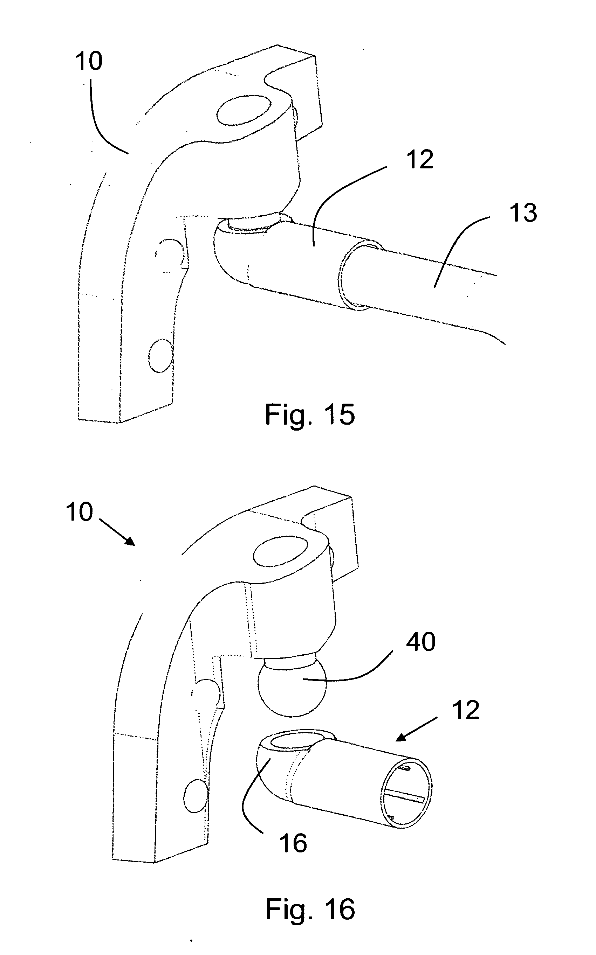

Eine weitere Ausführungsform der Erfindung ist in Fig. 15 gezeigt. Wenn am Ende des Bolzenabschnitts 18 ein Kugelkopf 40 vorgesehen wird, gewährleistet dieser auch die Haltefunktion. Hierbei kann als ein weiterer Vorteil eine weitere Flexibilität in der Verwendung der gleichen Spiegelhalterung für verschiedene Anwendungsfälle erreicht werden. Vergleichbar mit der rotatorisch beliebigen Montage des Tragrohres 14 in einer Rohrhülse 12, wie dies in Fig. 9 gezeigt ist, kann die Stellung der Tragstruktur und des Spiegelkopfes gegenüber der Spiegelhalterung geändert werden unter Beibehaltung der Drehfunktion um die Drehachse A. Einschränkend wirkt die geringere Flexibilität im Winkel gegenüber der anderen Lösung, jedoch kann auch nach Montage der Tragstruktur (Tragrohr und/oder Kopf) die Stellung des Spiegels relativ zum Spiegelfuß noch verändert werden, während die Ausnutzung der beliebigen Rohrstellung in der Rasthülse durch die Montage bezüglich der Längsdrehachse B einmalig die relative Lage von Spiegel zum Spiegelfuß festlegt.

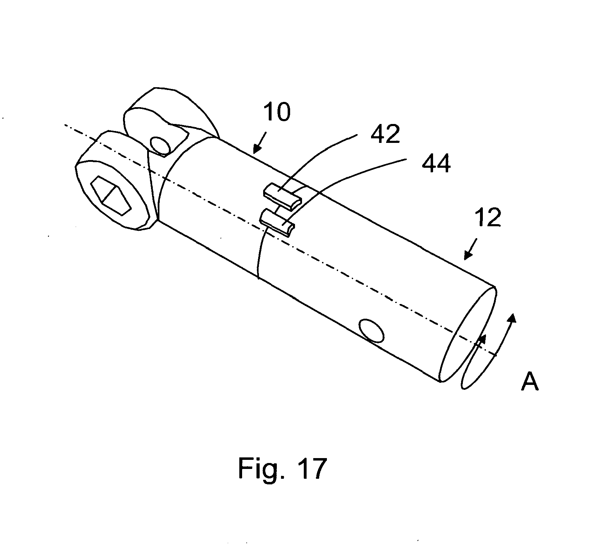

Da die erfindungsgemäße Drehverbindung grundsätzlich eine 360°-Drehung der beiden Verbindungsteile 10 und 12 zulässt, vorausgesetzt, die notwendige Abklappkraft bzw. Rast-/Reibkräfte werden überwunden, kann an geeigneten Abschnitten der beiden Verbindungsteile - außer den Mantelflächen 18 und 24 - jeweils ein oder mehrere miteinander zusammenwirkende Anschläge 42 und 44 vorgesehen sein, um den Drehbereich der Drehverbindung zu begrenzen. Ein Beispiel solcher Anschläge ist in der Fig. 17 gezeigt.

In der vorausgegangenen Beschreibung wurde die erfindungsgemäße Spiegelhalterung mit Bezug auf bestimmte Ausführungsformen beschrieben. Jedoch ist die in den Ansprüchen definierte Spiegelhalterung nicht auf diese Ausführungen beschränkt. Insbesondere lassen sich auch die Merkmale der einzelnen Ausführungsformen miteinander kombinieren.

Wenn die erfindungsgemäße Spiegelhalterung aus zwei Kunststoffspritzgussteilen gefertigt wird, können diese so ausgeführt werden, dass sie direkt die später sichtbaren Außenflächen der Spiegelhalterung darstellen. Dies hat den Vorteil, dass diese ohne Demontageaufwand kunststoffgerecht recycelt werden. Andererseits ist jedoch denkbar, dass diese mit Abdeckungen verdeckt werden, um mehr Freiheiten hinsichtlich der Bauteilgestaltung zu erreichen.

Ferner wurde die erfindungsgemäße Spiegelhalterung mit Bezug auf diverse Arten von Nutzfahrzeugspiegeln beschrieben. Das grundsätzliche Prinzip der Spiegelhalterung ist jedoch auch auf den Pkw- oder Motorrad-Bereich übertragbar.

Ausgehend von der Lösung, wie diese in Fig. 10 gezeigt wird, ist es auch möglich, eine derartige Spiegelhalterung für ein Spiegelsystem mit nur einer Halterung, wie dies bei Rampen- und Frontspiegeln typisch ist, einzusetzen. Somit wird unter Verwendung einer kostengünstigen Spiegelhalterung in einfachster Weise die geforderte Verstellbarkeit des Spiegelkopfes realisiert.

### Bezugszeichenliste

- 2: Spiegelanordnung
- 4: obere Spiegelhalterung
- 6: untere Spiegelhalterung
- 8: Spiegelgehäuse
- 10: fahrzeugseitige Halterung (erstes Verbindungsteil)
- 12: spiegelseitige Halterung (zweites Verbindungsteil)
- 13: Tragrohr
- 14: Bolzen
- 16: Hülse
- 18: äußere Mantelfläche
- 20: Vorsprung
- 22: Nut
- 24: innere Mantelfläche
- 26: Befestigungsabschnitt
- 28: Bohrung
- 30: (erste) Rastflächen
- 32: (zweite) Rastflächen
- 34: Stirnfläche
- 36: Hülsenboden
- 38: Quersteg
- 40: Kugelkopf
- 42: Anschlag
- 44: Anschlag
- A: Drehachse
- B: Längsachse
- D: Wandstärke
- d: Wandstärke

## Patentansprüche

1. Spiegelhalterung (4, 6) für Kfz-Spiegel (8), mit einem ersten und einem zweiten Verbindungsteil (10, 12), die um eine Drehachse (A) drehbar miteinander verbunden sind, wobei
das erste Verbindungsteil (10) einen Bolzen (14) aufweist, der bezüglich der Drehachse (A) eine rotationssymmetrische Mantelfläche (18) umfasst,
das zweite Verbindungsteil (12) eine den Bolzen (14) umgreifende Hülse (16) mit einer zu der rotationssymmetrischen Mantelfläche (18) komplementär geformten inneren Mantelfläche (24) aufweist, und
Bolzen (14) oder Hülse (16) wenigstens ein Eingriffselement (20) aufweist, das in ein komplementär geformtes Halteelement (22) in Hülse (16) oder Bolzen (14) eingreift und eine Verschiebung der beiden Verbindungsteile (10, 12) in Richtung der Drehachse (A) blockiert, **dadurch gekennzeichnet, dass**
die Spiegelhalterung (4, 6) im In-Mould-Assembly- oder Montagespritzguss-Verfahren hergestellt ist.

2. Spiegelhalterung (4, 6) nach Anspruch 1, **dadurch gekennzeichnet, dass** die Hülse (16) und der Bolzen (14) zueinander komplementär geformte erste und zweite Rastflächen (30, 32) aufweisen.

3. Spiegelhalterung (4, 6) nach Anspruch 2, **dadurch gekennzeichnet, dass** die beiden Rastflächen (30, 32) auf den Mantelflächen (18, 24) von Bolzen (14) und Hülse (16) ausgebildet sind.

4. Spiegelhalterung nach Anspruch 2, **dadurch gekennzeichnet, dass** die beiden Rastflächen (30, 32) auf der Stirnfläche (34) des Bolzens (14) sowie dem Boden (36) der Hülse (30) ausgebildet sind.

5. Spiegelhalterung (4, 6) nach einem der vorhergehenden Ansprüche, **dadurch gekennzeichnet, dass** die Drehachse (A) quer zur Längsachse (B) vom ersten und/oder zweiten Verbindungsteil (12) ausgebildet ist.

6. Spiegelhalterung (4, 6) nach einem der vorhergehenden Ansprüche, **dadurch gekennzeichnet, dass** die Hülse (16) des zweiten Verbindungsteils (12) ein Spritzgussteil ist und aus einem ersten Kunststoff besteht, der Bolzen (14) des ersten Verbindungsteils (10) ein Spritzgussteil ist und aus einem zweiten Kunststoff besteht, und der erste Kunststoff einen niedrigeren Schmelzpunkt als der zweite Kunststoff hat oder der erste Kunststoff und der zweite Kunststoff miteinander inkompatible Kunststoffe sind.

7. Spiegelhalterung (4, 6) nach einem der vorhergehenden Ansprüche, **dadurch gekennzeichnet, dass** das Halteelement eine in der Mantelfläche (18, 24) von Bolzen (14) oder Hülse (16) umlaufende Nut (22) ist und das Eingriffselement eine in die Nut (22) eingreifende, vorzugsweise ebenfalls umlaufende, Erhebung (20) ist.

8. Spiegelhalterung (4, 6) nach einem der Ansprüche 2 bis 6, **dadurch gekennzeichnet, dass** das Halteelement eine in der Mantelfläche (18, 24) von Bolzen (14) oder Hülse (16) umlaufende Nut (22) ist und das Eingriffselement eine in die Nut (22) eingreifende, vorzugsweise ebenfalls umlaufende, Erhebung (20) ist und die ersten und zweiten Rastflächen (30, 32) in der Nut (22) bzw. an der Erhebung (20) vorgesehen sind.

9. Spiegelhalterung (4, 6) nach Anspruch 7, **dadurch gekennzeichnet, dass** die Nut (22) und die Erhebung (20) am Ende der jeweiligen Mantelfläche ausgebildet sind.

10. Spiegelhalterung (4, 6) nach einem der vorhergehenden Ansprüche, **dadurch gekennzeichnet, dass** das erste Verbindungsteil (10) anstelle des Bolzens (14) einen kugelförmigen Abschnitt aufweist, welcher von einem komplementär geformten Abschnitt des zweiten Verbindungsteils (12) umgriffen wird.

11. Spiegelhalterung (4, 6) nach einem der vorhergehenden Ansprüche, **dadurch gekennzeichnet, dass** eines der beiden Verbindungsteile ein Spiegelfuß (10) zur Montage des Spiegels an ein Fahrzeug und das andere ein Spiegelarm oder Spiegelarmteil (12) ist.

12. Spiegelhalterung (4, 6) nach Anspruch 1, **dadurch gekennzeichnet, dass** die Kunststoffschmelze bei der Herstellung des zweiten Verbindungsteils (16) keine feste Verbindung mit dem Kunststoff des ersten Verbindungsteils (10) eingeht.

13. Spiegelhalterung (4, 6) nach Anspruch 12, **dadurch gekennzeichnet, dass** nach Abschluss des Herstellungsprozesses des zweiten Verbindungsteils (12) durch das Erkalten des Kunststoffes eine dauerhafte Pressung von der Hülse (16) auf den Bolzen (14) ausgeübt wird.

14. Spiegelhalterung (4, 6) nach einem der vorhergehenden Ansprüche, **dadurch gekennzeichnet, dass** beide Verbindungsteile (10, 12) unlösbar miteinander verbunden sind.

15. Spiegelanordnung (2) mit wenigstens einer Spiegelhalterung (4, 6) gemäß einem der vorhergehenden Ansprüche und einem daran befestigten Spiegel (8).

## Claims

1. A mirror holder (4, 6) for automotive vehicle mirrors (8), comprising a first and a second connection component (10, 12) connected to each other so as to be rotatable about a rotation axis (A), wherein
the first connection component (10) comprises a bolt (14) having a rotationally symmetrical jacket surface (18) along the rotation axis (A),
the second connection component (12) comprises a sleeve (16) encircling the bolt (14) and having an inner jacket surface (24) shaped complementarily with the rotationally symmetrical jacket surface (18), and
the bolt (14) or the sleeve (16) comprises at least one engagement element (20) which is engaged in a complementarily shaped retaining member (22) in the sleeve (16) or the bolt (14) and blocks a displacement of the two connection components (10, 12) in the direction of the rotation axis (A), **characterized in that**
the mirror holder (4, 6) is produced in an in-mold assembly process or an assembly injection molding process, respectively.

2. The mirror holder (4, 6) according to claim 1, **characterized in that** the sleeve (16) and the bolt (14) have complementarily shaped first and second locking surfaces (30, 32).

3. The mirror holder (4, 6) according to claim 2, **characterized in that** the two locking surfaces (30, 32) are formed on the jacket surfaces (18, 24) of the bolt (14) and the sleeve (16).

4. The mirror holder according to claim 2, **characterized in that** the two locking surfaces (30, 32) are formed on the end face (34) of the bolt (14) and on the bottom (36) of the sleeve (30).

5. The mirror holder (4, 6) according to any one of the preceding claims, **characterized in that** the rotation axis (A) is formed transversely to the longitudinal axis (B) from the first and/or second connection component (12).

6. The mirror holder (4, 6) according to any one of the preceding claims, **characterized in that** the sleeve (16) of the second connection component (12) is an injection-molded part and consists of a first plastic material, the bolt (14) of the first connection component (10) is an injection-molded part and consists of a second plastic material, and the first plastic material has a lower melting point than the second plastic material, or the first plastic material and the second plastic material are plastic materials that are not compatible with each other.

7. The mirror holder (4, 6) according to any one of the preceding claims, **characterized in that** the retaining member is a continuous groove (22) in the jacket surface (18, 24) of the bolt (14) or the sleeve (16) and the engagement element is a - preferably also continuous - protrusion (20) engaging in the groove (22).

8. The mirror holder (4, 6) according to any one of the claims 2 to 6, **characterized in that** the retaining member is a continuous groove (22) in the jacket surface (18, 24) of the bolt (14) or the sleeve (16) and the engagement element is a - preferably also continuous - protrusion (20) engaging in the groove (22) and the first and second locking surfaces (30, 32) are provided in the groove (22) or on the protrusion (20), respectively.

9. The mirror holder (4, 6) according to claim 7, **characterized in that** the groove (22) and the protrusion (20) are formed at the end of the respective jacket surface.

10. The mirror holder (4, 6) according to any one of the preceding claims, **characterized in that** the first connection component (10) comprises instead of the bolt (14) a spherical portion which is encircled by a complementarily shaped portion of the second connection component (12).

11. The mirror holder (4, 6) according to any one of the preceding claims, **characterized in that** one of the two connection components is a mirror base (10) for mounting of the mirror on a vehicle, and the other one is a mirror arm or mirror arm part (12).

12. The mirror holder (4, 6) according to claim 1, **characterized in that** during the manufacture of the second connection component (16), the molten plastic material does not enter into a solid connection with the plastic material of the first connection component (10).

13. The mirror holder (4, 6) according to claim 12, **characterized in that** following completion of the manufacturing process of the second connection component (12), permanent pressing is exerted on the bolt (14) by the sleeve (16) due to solidification of the plastic material.

14. The mirror holder (4, 6) according to any one of the preceding claims, **characterized in that** both connection components (10, 12) are connected to each other in a non-releasable manner.

15. A mirror assembly (2) comprising at least one mirror holder (4, 6) according to any one of the preceding claims and a mirror (8) fastened thereto.

## Revendications

1. Support de rétroviseur (4, 6) pour un rétroviseur (8) de véhicule automobile, avec une première et une deuxième pièces de connexion (10, 12) raccordées l'une à l'autre de manière à pouvoir pivoter autour d'un axe de rotation (A),
la première pièce de connexion (10) étant pourvue d'un axe (14) présentant une surface latérale (18) à symétrie de révolution par rapport à l'axe de rotation (A),
la deuxième pièce de connexion (12) étant pourvue d'un manchon (16) entourant l'axe (14), avec une surface latérale interne (24) de forme complémentaire à la surface latérale (18) à symétrie de révolution, et
l'axe (14) ou le manchon (16) étant pourvus d'au moins un élément d'enclenchement (20) qui s'engage dans un élément de maintien (22) de forme complémentaire du manchon (16) ou de l'axe (14) et qui empêche un déplacement vers l'axe de rotation (A) des deux pièces de connexion (10, 12), **caractérisé en ce que**
ledit support de rétroviseur (4, 6) est fabriqué au moyen d'un procédé d'assemblage dans le moule ou de montage par moulage par injection.

2. Support de rétroviseur (4, 6) selon la revendication 1, **caractérisé en ce que** le manchon (16) et l'axe (14) présentent une première et une deuxième surfaces d'enclenchement (30, 32) de formes complémentaires.

3. Support de rétroviseur (4, 6) selon la revendication 2, **caractérisé en ce que** les deux surfaces d'enclenchement (30, 32) sont formées sur les surfaces latérales (18, 24) de l'axe (14) et du manchon (16).

4. Support de rétroviseur selon la revendication 2, **caractérisé en ce que** les deux surfaces d'enclenchement (30, 32) sont formées sur la surface frontale (34) de l'axe (14) et sur le fond (36) du manchon (30).

5. Support de rétroviseur (4, 6) selon l'une des revendications précédentes, **caractérisé en ce que** l'axe de rotation (A) est prévu perpendiculairement à l'axe longitudinal (B) de la première et/ou de la deuxième pièce de connexion (12).

6. Support de rétroviseur (4, 6) selon l'une des revendications précédentes, **caractérisé en ce que** le manchon (16) de la deuxième pièce de connexion (12) est une pièce moulée par injection et est constitué d'une première matière synthétique, l'axe (14) de la première pièce de connexion (10) est une pièce moulée par injection et est constitué d'une deuxième matière synthétique, et la première matière synthétique présente un point de fusion inférieur à celui de la deuxième matière synthétique, ou la première matière synthétique et la deuxième matière synthétique sont des matières synthétiques non compatibles entre elles.

7. Support de rétroviseur (4, 6) selon l'une des revendications précédentes, **caractérisé en ce que** l'élément de maintien est une rainure (22) périphérique de la surface latérale (18, 24) de l'axe (14) ou du manchon (16), et l'élément d'enclenchement un relief (20), préférentiellement périphérique lui aussi, qui s'engage dans la rainure (22).

8. Support de rétroviseur (4, 6) selon l'une des revendications 2 à 6, **caractérisé en ce que** l'élément de maintien est une rainure (22) périphérique de la surface latérale (18, 24) de l'axe (14) ou du manchon (16), et l'élément d'enclenchement un relief (20), préférentiellement périphérique lui aussi, qui s'engage dans la rainure (22), et la première et la deuxième surfaces d'enclenchement (30, 32) sont prévues dans la rainure (22) ou sur le relief (20).

9. Support de rétroviseur (4, 6) selon la revendication 7, **caractérisé en ce que** la rainure (22) et le relief (20) sont formés à l'extrémité de la surface latérale correspondante.

10. Support de rétroviseur (4, 6) selon l'une des revendications précédentes, **caractérisé en ce que** la première pièce de connexion (10) présente une partie sphérique au lieu de l'axe (14), laquelle est entourée par une partie de forme complémentaire de la deuxième pièce de connexion (12).

11. Support de rétroviseur (4, 6) selon l'une des revendications précédentes, **caractérisé en ce qu'**une des deux pièces de connexion est un pied de rétroviseur (10) pour le montage du rétroviseur sur un véhicule, et l'autre pièce un bras de rétroviseur ou une partie de bras (12) de rétroviseur.

12. Support de rétroviseur (4, 6) selon la revendication 1, **caractérisé en ce que**, lors de la fabrication de la deuxième pièce de connexion (16), la fonte de matière synthétique ne forme aucune liaison stable avec la matière synthétique de la première pièce de connexion (10).

13. Support de rétroviseur (4, 6) selon la revendication 12, **caractérisé en ce qu'**à l'issue du processus de fabrication de la deuxième pièce de connexion (12), une contrainte de serrage durable du manchon (16) est exercée sur l'axe (14) par refroidissement de la matière synthétique.

14. Support de rétroviseur (4, 6) selon l'une des revendications précédentes, **caractérisé en ce que** les deux pièces de connexion (10, 12) sont raccordées l'une à l'autre de manière inamovible.

15. Dispositif de rétroviseur (2) avec au moins un support de rétroviseur (4, 6) selon l'une des revendications précédentes, et un rétroviseur (8) fixé sur celui-ci.
